Europäisches Patentamt

European Patent Office

Office européen des brevets

(19)

(11) Veröffentlichungsnummer: **0 049 346**
**B1**

(12) **EUROPÄISCHE PATENTSCHRIFT**

(45) Veröffentlichungstag der Patentschrift: 30.10.85

(51) Int. Cl.⁴: **G 01 N 31/22**

(21) Anmeldenummer: 81106276.9

(22) Anmeldetag: 12.08.81

(54) Prüfröhrchen zum Nachweis von Öl in Luft.

(30) Priorität: 02.10.80 DE 3037226

(43) Veröffentlichungstag der Anmeldung:
14.04.82 Patentblatt 82/15

(45) Bekanntmachung des Hinweises auf die
Patenterteilung:
30.10.85 Patentblatt 85/44

(84) Benannte Vertragsstaaten:
AT BE CH FR GB IT LI NL SE

(56) Entgegenhaltungen:
CH-A- 459 610
GB-A-1 011 929
GB-A-1 574 807
US-A-3 700 409

JOURNAL OF ANALYTICAL CHEMISTRY,
USSR, Band 32, September 1977, New York,
US, V.M. OSTROVSKAYA: "Chromogenic
analytical reagents fixed to supports", Seiten
1442-1454
"PRÜFRÖHRCHEN TASCHENBUCH" der Fa.
DRÄGER, 3. Ausgabe, Mai 1976

(73) Patentinhaber: AUERGESELLSCHAFT GMBH
Thiemannstrasse 1
D-1000 Berlin 44 (DE)

(72) Erfinder: Mascher, Werner, Dr.
Bismarckstrasse 6
D-1000 Berlin 41 (DE)
Erfinder: Kretschmer, Wolfgang
Reichsstrasse 97
D-1000 Berlin 19 (DE)

**Beschreibung**

Die Erfindung betrifft ein Prüfröhrchen zum Nachweis von Öl in Luft nach dem Oberbegriff des Patentanspruchs 1.

Bei einem bekannten Prüfröhrchen dieser Art besteht die Indikatorschicht aus einem inerten Träger, der als Nachweisreagenz für Alkoholdampf mit einer Lösung von Chromsäureanhydrid in konzentrierter Schwefelsäure imprägniert ist (GB—A—1 011 929). Mit diesem Prüfröhrchen kann der Nachweis von Öl in Luft nicht erbracht werden Daß dies bei einem Prüfröhrchen zum Nachweis von Alkohol nicht zu erwarten war, wird bei einem weiteren bekannten Prüfröhrchen deutlich, wo angegeben ist, daß Kohlenwasserstoffe wie Benzin, Benzol oder Halogenkohlenwasserstoffe die Anzeige bei einem Prüfröhrchen für Alkohol, das ebenfalls aus einem inerten Träger mit Chrom(VI)-Imprägnierung besteht, nicht beeinflußen (Dräger-Prüfröhrchen Taschenbuch, 3. Ausgabe, Mai 1976, Seite 32).

Bei einem bekannten naßchemischen Nachweisverfahren von Öl in Wasser ist ein sogenannter Tüpfeltest angegeben, bei dem auf einem Filterpapier verschmutztes Abflußwasser aufgebracht und mit einem Tropfen chromhaltiger schwefelsäure betupft wird (US—A—3 700 409). Ein derartiges Verfahren kann jedoch nicht auf einem festen Reagenzträger im trockenen Milieu, wie bei einem Prüfröhrchenverfahren, ablaufen.

Schließlich ist ein Prüfröhrchen zum Nachweis von Öl in Luft bekannt, bei dem auf einem Träger aus Kieselgel der Ölgehalt der Prüfluft niederschlägt und anschließend durch rauchende Schwefelsäure unter Mitwirkung eines Katalysators zu einem braunen Reaktionsprodukt umgesetzt wird (Gebrauchsanweisung 234-28371, 1. Ausgabe, August 1977, Dräger-Röhrchen Öl 10/a).

Bei dieser bekannten Ausführung eines Prüfröhrchens ist es als Nachteil anzusehen, daß zur Ausführung der Messung zwei Schritte ausgeführt werden müssen, und zwar muß zunächst das Öl aus einer ausreichend großen Menge Luft auf der Kieselgel-Schicht gesammelt und danach das gesammelte Öl mit der Schwefelsäure umgesetzt werden, in dem eine die Schwefelsäure enthaltende Ampulle aufgebrochen werden muß, damit die Schwefelsäure über die Kieselgel-Schicht fließen kann. Weiterhin wird bei dieser Ausführung keine definierte Farbzone als Anzeige erzielt, weil das Kieselgel in dem Maße verfärbt wird, wie es von der Schwefelsäure benetzt wird. Die Intensität der Braunfärbung ist von der Menge des gesammelten Öls abhängig, so daß die stärkste Verfärbung am Lufteintrittsende der Kieselgel-Schicht des Prüfröhrchens auftritt und weiter hinter die verfärbte Schicht heller wird. Es liegt auf der Hand, daß die Abschätzung der Farbtiefe und der Vergleich mit der zugehörigen Farbskala sehr ungenau ist. Auch ist die Abschätzung von Zwischenwerten schwierig. Darüber hinaus liegt das Meßergebnis erst dann vor, wenn der gesamte Prüfaufwand, wie lange Sammelzeit und Aufbrechen der Schwefelsäure-Ampulle, vollzogen ist.

Der Erfindung liegt daher die Aufgabe zugrunde, ein Prüfröhrchen zum quantitativen Nachweis geringer Ölkonzentrationen in Luft zu schaffen, bei dem die Messung in einem Schritt bei gleichzeitiger Anzeige des Meßergebnisses erfolgt und eine eindeutig bestimmbare Anzeige gewährleistet wird.

Diese Aufgabe wird erfindungsgemäß dadurch gelöst, daß die Indikatorschicht mit Verbindungen des 6-wertigen Chroms in einer Menge von 0,5 bis 1 g/100 g Trägermaterial imprägniert ist, wobei die Anzeigeempfindlichkeit bei 1 mg Öl pro 1 m³ Prüfluft bei einer Durchflußgeschwindigkeit der Luft von 2 l/min liegt.

Die mit der Erfindung erzielten Vorteile bestehen insbesondere darin, daß gleichzeitig mit dem Durchleiten der Prüfluft die Anzeige entsteht und die Länge der Farbzone eindeutig bestimmbar ist und damit auch die durchgesetzte Öl-Menge bzw. Ölkonzentration der Prüfluft. Außerdem weist das Prüfröhrchen eine hohe Anzeigeempfindlichkeit auf. Es können Röhrchen hergestellt werden, die 1 mg/m³ Öl bei 10 l Prüfluft (bei 2 l/min fünf Minuten Meßzeit) mit einigen Millimetern Anzeigenlänge nachweisen. Da das Sammeln des Öls und Bildung der Farbzone in einem Schritt erfolgt, kann die Messung rechtzeitig abgebrochen werden, so daß Überanzeigen vorteilhaft vermieden werden.

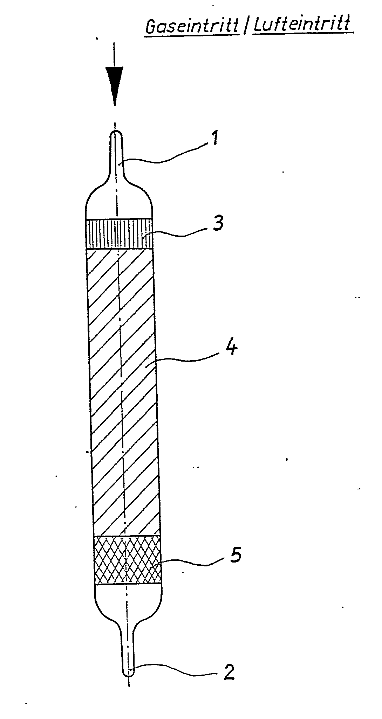

Ein Ausführungsbeispiel des erfindungsgemäßen Prüfröhrchens ist in der Zeichnung dargestellt und wird im folgenden näher beschrieben. Die einzige Figur zeigt einen Längsschnitt eines Prüfröhrchens. Wie aus Figur ersichtlich ist, besitzt das Prüfröhrchen in Form eines Glasröhrchens abgedichtete Enden 1 und 2. In Durchströmungsrichtung der Prüfluft sind im Prüfröhrchen folgende Bauteile angeordnet: ein für den Luftstrom durchlässiger Abschlußbaustein 3 in Form einer Glasfritte, eine Indikatorschicht 4 und ein weiterer Abschlußbaustein 5, der in Form eines Glasseidengewebe-Stopfens vorliegt.

Die Abschlußbausteine 3 und 5 dienen zur Festlegung der Schicht 4 im Prüfröhrchen. Die Indikatorschicht 4 besteht aus einem inerten, d. h. säurebeständigen und nicht reduzierend wirkenden, Träger, der erfindungsgemäß mit Verbindungen des 6-wertigen Chroms imprägniert ist. Als inerter Träger der Indikatorschicht 4 kann ein körniges Material, ein Vlies oder ein Sinterkörper verwendet werden. Als poröses körniges Material können beispielsweise Kieselgel oder ein keramisches Bruchkorn, als unporöses Material Glasperlen oder Quarzsplitt in Frage kommen. Das Vlies kann aus Glasfasern oder keramischen Fasern bestehen, während der Sinterkörper als Träger aus Glas oder Keramik bestehen kann. Um die Reaktionsfähigkeit der Indikatorschicht 4 zu erhöhen, wird dieser Säure, undzwar bevorzugt Schwefelsäure oder ein Schwefelsäure-Wasser-Gemisch, zugesetzt.

## Patentansprüche

1. Prüfröhrchen zum Nachweis von Öl in Luft, mit einer die zu bestimmende Ölkomponente anzeigende und aus einem inerten Träger bestehenden Indikatorschicht, dadurch gekennzeichnet, daß die Indikatorschicht mit Verbindungen des 6-wertigen Chroms in einer Menge von 0,5 bis 1 g/100 g Trägermaterial imprägniert ist, wobei die Anzeigeempfindlichkeit bei 1 mg Öl pro 1 m³ Prüfluft bei einer Durchflußgeschwindigkeit der Luft von 2 l/min liegt.

2. Prüfröhrchen nach Anspruch 1, dadurch gekennzeichnet, daß als 6-wertige Chromverbindungen Chromtrioxid und Alkalidichromate eingesetzt werden.

3. Prüfröhrchen nach Anspruch 1, dadurch gekennzeichnet, daß der mit Verbindungen des 6-wertigen Chroms imprägnierte Träger zisätzlich mit Schwefelsäure oder mit einer Schwefelsäure-Wasser-Mischung imprägniert ist.

4. Prüfröhrchen nach Anspruch 3, dadurch gekennzeichnet, daß die Schwefelsäure-Wasser-Mischung bevorzugt 80 Gew% bis 100 Gew% an Schwefelsäure enthält.

5. Prüfröhrchen nach Anspruch 3, dadurch gekennzeichnet, daß die Menge der Schwefelsäure-Wasser-Mischung maximal 80 ml, bevorzugt 50 ml bis 70 ml,/100 g Träger beträgt.

6. Prüfröhrchen nach Anspruch 1, dadurch gekennzeichnet, daß der inerte Träger der Schicht (4) aus einem porösen körnigen Material, Kieselgel oder einem keramischen Bruchkorn, besteht.

7. Prüfröhrchen nach Anspruch 1, dadurch gekennzeichnet, daß der inerte Träger aus einem unporösen körnigen Material, Glasperlen, Quarzsplitt, besteht.

8. Prüfröhrchen nach Anspruch 1, dadurch gekennzeichnet, daß der inerte Träger aus einem Vlies aus Glasfasern, einem Vlies aus keramischen Fasern, besteht.

9. Prüfröhrchen nach Anspruch 1, dadurch gekennzeichnet, daß der inerte Träger aus Glas— oder Keramik-Sinterkörpern beliebiger Form besteht.

## Revendications

1. Petit tube de contrôle pour déceler de l'huile dans de l'air, comportant une couche indicatrice indiquant les composants huileux à déterminer et formée d'un support inerte, caractérisé en ce que la couche indicatrice est imprégnée avec des composés du chrome de valence 6, en quantité comprise entre 0,5 et 1 g/100 g de matière de support, la sensibilité d'indication étant de 1 mg d'huile par 1 m² d'air de contrôle dans le cas d'une vitesse d'écoulement de l'air de 2 l/min.

2. Petit tube contrôle selon la revendication 1, caractérisé en ce que comme composé de chrome de valence 6, on utilise du trioxyde de chrome et du dichromate alcalin.

3. Petit tube de contrôle selon la revendication 1, caractérisé en ce que le support imprégné avec des composés de chrome de valence 6 est additionnellement imprégné d'acide sulfurique ou bien d'un mélange d'eau et d'acide sulfurique.

4. Petit tube de contrôle selon la revendication 3, caractérisé en ce que le mélange d'eau et d'acide sulfurique contient avantageusement 80 à 100% en poids d'acide sulfurique.

5. Petit tube de contrôle selon la revendication 3, caractérisé en ce que la quantité du mélange d'eau et d'acide sulfurique s'élève au maximum à 80 ml, avantageusement entre 50 ml et 70 ml/100 g de support.

6. Petit tube de contrôle selon la revendication 1, caractérisé en ce que le support inerte de la couche 4 se compose d'une matière granuleuse poreuse, d'un gel de silice ou bien d'une matière granuleuse céramique.

7. Petit tube de contrôle selon la revendication 1, caractérisé en ce que le support inerte se compose d'une matière granuleuse non poreuse, de perles de verre ou de morceaux de quartz.

8. Petit tube de contrôle selon la revendication 1, caractérisé en ce que le support inerte se compose d'une mèche formée de fibres de verre, ou bien d'une mèche formée de fibres céramique.

9. Petit tube de contrôle selon la revendication 1, caractérisé en ce que le support inerte se compose de corps frittés en verre ou en céramique de forme quelconque.

## Claims

1. Test tube for detection of oil in air, comprising an indicator layer indicating the oil component which is to be determined and consisting of an inert carrier, chracterised in that the indicator layer is impregnated with compounds of hexavalent chromium in a quantity of 0.5g to 1g/100g of carrier substance, the sensitivity of indication amounting to 1mg of oil per 1m³ of air tested at a throughflow air speed of 2 litre/min.

2. Test tube according to claim 1, characterised in that chromium trioxide and alkali dichromates are utilised as the hexavalent chromium compound.

3. Test tube according to claim 1, characterised in that the carrier impregnated with compounds of hexavalent chromium is complementarily impregnated with sulphuric acid or with a sulphuric acid/water mixture.

4. Test tube according to claim 3, characterised in that the sulpheric acid/water mixture preferably contains 80 to 100% by weight of sulphuric acid.

5. Test tube according to claim 3, chracterised in that the quantity of the sulphuric acid/water mixture amounts to a maximum of 80ml and preferably to 50ml to 70ml per 100g of carrier substance.

6. Test tube according to claim 1, characterised in that the inert carrier of the layer (4) consists of a porous grainy material, silica gel or ceramic granular debris.

7. Test tube according to claim 1, characterised in that the inert carrier consists of a non-porous grainy material, glass beads, broken silica.

8. Test tube according to claim 1, characterised in that the inert carrier consists of a mat of glass fibres, a mat of ceramic fibres.

9. Test tube according to claim 1, characterised in that the inert carrier consists of glass or ceramic sintered elements of optional shape.

0 049 346

Gaseintritt / Lufteintritt

1